# EUROPÄISCHE PATENTANMELDUNG

(11) **EP 0 781 948 A1**
(43) Veröffentlichungstag der Anmeldung: **02.07.1997**
(21) Anmeldenummer: 96810851.4
(22) Anmeldetag: 05.12.1996
(51) Int. Cl.: F16J 15/34

(54) **Turbomaschine für nicht ideale Prozessgase**

(30) Priorität: 29.12.1995 EP 95810823
(71) Anmelder: Sulzer Turbo AG, 8005 Zürich (CH)
(72) Erfinder: Heinrich, Lorenzen, 5417 Untersiggenthal (CH)
(74) Vertreter: Heubeck, Bernhard

(57) **Zusammenfassung**

Mit der Erfindung ist eine Anordnung für eine Trockengasgleitringdichtung (24, 25) in einer Turbomaschine gezeigt, die es ermöglicht unabhängig von Stillstand oder Betrieb Umgebungsbedingungen im Bereich von Trockengasgleitringdichtungen zu schaffen bei denen keine Flüssigkeit ausfällt. Dadurch dass dem Leckagestrom (30) im Stillstand der Turbomaschine ähnlich wie bei deren Betrieb Wärme zugeführt wird, kann eine Unterkühlung im Bereich der Trockengasgleitringdichtung mit allen ihren negativen Wirkungen unterdrückt werden und der Start der Turbomaschine erfolgt aus einem wesentlich sichereren Betriebszustand heraus.

## Beschreibung

Die Erfindung handelt von einer Turbomaschine für nicht ideale Prozessgase, insbesondere Turboverdichter, mit einem Gehäuse und mit einem Rotor, welcher über Trockengasgleitringdichtungen gegenüber dem Gehäuse abgedichtet ist, um einen Leckagestrom von Prozessgas gegen Atmosphäre klein zu halten.

In der DE-A-39 42 408 sind Trockengasgleitringdichtungen und ihr Einsatz in Turbomaschinen beschrieben. Solche Trockengasgleitringdichtungen werden beispielsweise in Turboverdichtern bei der Erdgasproduktion auf Ölplattformen und in Raffinerien eingesetzt, wobei Systemdrücke von über hundert bar gegenüber Atmosphäre auftreten können. Die Trockengasgleitringdichtungen haben zwar den Vorteil, dass sie den Leckagestrom klein halten, aber sie sind auch hochbelastete, empfindliche Teile, bei deren Ausfall der Turboverdichter stillgesetzt werden muss. D.h. die Verfügbarkeit eines Turbokompressors kann nur so gut wie die seiner Trockengasgleitringdichtungen sein.

Es ist daher Aufgabe der Erfindung, Betriebszustände an den Trockengasgleitringdichtungen zu verhindern, die zum Ausfall der Dichtungen und der Turbomaschine führen. Diese Aufgabe wird mit den Kennzeichen von Anspruch 1 gelöst, indem der Leckagestrom wahlweise nach Betriebszustand aus Prozessgas oder aus Sperrgas herstellbar ist und indem eine auf den Leckagestrom wirksame Heizeinrichtung an der Trockengasgleitringdichtung angebracht ist, die beispielsweise im Stillstand oder vor dem Start der Turbomaschine eine unzulässige Abkühlung des Leckagestroms und ein Ausfällen von nicht gasförmigen Stoffen aus dem Leckagestrom verhindert. Es hat sich nämlich gezeigt, dass gerade die Abkühlung des Leckagestromes im Stillstand eine verheerende Auswirkung auf eine Trockengasgleitringdichtung beim Start der Turbomaschine haben kann.

Ein Turboverdichter, der ein Prozessgas bei einem höheren Systemdruck fördert, wird in der Regel im Stillstand über Sperrventile vom Prozess isoliert. Das im Verdichter eingeschlossene Gas entweicht nun sehr langsam in einem Leckagestrom durch die stillstehende Trockengasgleitringdichtung. Solange der Turboverdichter noch lief wurde durch die Schleppwirkung der drehenden Teile und in dem Dichtspalt der Trockengasgleitringdichtung Wärme an den Leckagestrom und an die Umgebung abgegeben. Bei stillstehendem Verdichter findet hingegen eine Expansion im Leckagestrom statt, die um so mehr zu einer Abkühlung von Leckagestrom und der Umgebung führt, als das Prozessgas vom idealen Gas abweicht. Dieser nach Joule-Tompson benannte Effekt führt nun dazu, dass das im Turboverdichter isolierte Reservoir an Prozessgas sich mit sinkendem Druck stark abkühlt und dass im Leckagestrom bei der Expansion auf Atmosphärendruck zusätzlich eine lokale Abkühlung stattfindet. Eine derartige lokale Abkühlung kann eine Reihe von Nachteilen mit sich bringen. Je nach Reinheit und Zusammensetzung vom Prozessgas können im Leckagestrom Produkte ausgefällt werden, die den Betrieb der Trockengasgleitringdichtung beim nächsten Start beeinträchtigen. Schon geringe Wasserdampfanteile können zu Eiskristallen führen. Die starke Abkühlung im Bereich der Trockengasgleitringdichtung erzeugt wegen der unterschiedlichen Wärmeausdehnungskoeffizienten der einzelnen Bauteile zusätzliche mechanische Spannungen und als Weichdichtungen ausgeführte Sekundärdichtungen verlieren ihre Elastizität. Ein in dieser Situation ausgelöster Start des Turboverdichters erhöht das Risiko für eine Havarie beträchtlich. Die Erfindung mindert das Risiko indem sie diese unzulässige Abkühlung und die daraus erwachsenden nachteiligen Wirkungen gar nicht erst eintreten lässt.

Die abhängigen Ansprüche 2 bis 12 zeigen vorteilhafte Weiterbildungen der Erfindung auf. Gerade bei Turbomaschinen, die bei hohen Systemdrücken beispielsweise über 100 bar eingesetzt werden, entstehen besonders grosse Abkühlungen, die mit der vorgeschlagenen Heizeinrichtung für den Leckagestrom verhindert werden.

Besonders vorteilhaft ist es die Heizeinrichtung vor dem Eintritt des Leckagestroms in den Dichtspalt der ersten Trockengasgleitringdichtung anzubringen und so den Leckagestrom vor der eigentlichen Expansion aufzuheizen. Wenn man die Heizeinrichtung ringförmig in einem separaten Kanal vor der Trockengasgleitringdichtung im Gehäuse um die Welle herumführt, erhält man eine Heizmöglichkeit, die es gestattet, ein beliebiges und vom Prozessgas unabhängiges Fluid als Wärmeträger für die Erwärmung des Leckagestroms zu verwenden. Eine besonders direkte Einwirkung der Heizeinrichtung entsteht, wenn der Leckagestrom quer durch einen Ringraum geführt wird, welcher unmittelbar an einen ringförmigen Heizkanal angrenzt.

Die Heizeinrichtung kann aber auch als elektrische Widerstandsheizung ausgeführt sein. Eine ringförmige Heizeinrichtung lässt sich sowohl im Innenteil des Turboverdichters als auch im patronenförmigen, stationären Aussenteil einer Trockengasgleitringdichtung unterbringen. Es versteht sich, dass die Heizeinrichtung je nach Schaltung der Trockengasgleitringdichtungen als Tandemanordnung, als gespiegelte Anordnung oder als triple-Anordnung jeweils an den günstigsten Ort zur Wärmeabgabe an den Leckagestrom gelegt wird oder zum Beispiel doppelt ausgeführt wird.

Um eine Überhitzung im Bereich der Trockengasgleitringdichtung auszuschliessen, kann die Heiztemperatur bei einem Fluid oder die erzeugte Wärmemenge bei einer elektrischen Widerstandsheizung von vorneherein so begrenzt werden, dass die Wärme leicht an die Umgebung abfliessen kann. Eine andere Möglichkeit besteht darin, vor dem Eintritt in den Dichtspalt einer Trockengasgleitringdichtung einen Temperaturfühler anzubringen. Dieser kann einerseits über eine Steuerung beim Unterschreiten einer vorgegebenen Temperatur die Heizeinrichtung für den Leckagestrom einschalten, er kann andererseits auch zum Abschalten der Heizeinrichtung verwendet werden, wenn eine vorgegebene Temperatur überschritten ist.

Der Temperaturfühler kann aber auch als Sicherheit bei der Startverriegelung des Turboverdichters verwendet werden, um bei Unterschreiten eines bestimmten Schaltwertes für die Temperatur des Leckagestromes einen Start grundsätzlich zu verhindern. Wenn die Heizeinrichtung so ausgelegt ist, dass keine Überhitzung stattfinden kann, genügt es auch die Steuerung so zu gestalten, dass die Heizeinrichtung in den Stillstandszeiten eingeschaltet ist.

Im folgenden wird die Erfindung anhand von Ausführungsbeispielen beschrieben. Es zeigen:
- Fig. 1: schematisch einen Turboverdichter, der über Absperrventile in Saug- und Druckleitung vom Prozess isoliert werden kann;
- Fig. 2: schematisch einen Längsschnitt durch einen Turboverdichter in Topfbauart, wobei die wesentlichen Bauteile aufgezeigt sind;
- Fig. 3: schematisch einen vergrösserten Ausschnitt aus Figur 2 im Bereich der saugseitigen Trockengasgleitringdichtung;
- Fig. 4: schematisch einen verkleinerten Querschnitt aus Figur 3, in welchem eine mögliche Ausführungsform einer Heizeinrichtung gezeigt ist;
- Fig. 5: schematisch einen Längsschnitt durch eine Trockengasgleitringdichtung auf der Saugseite eines Turboverdichters, wobei in einem partiellen Ausschnitt eine mäanderförmige Zirkulation einer Heizflüssigkeit angedeutet ist; und
- Fig. 6: schematisch die Dichtungsanordnung von Fig. 5, wobei die Heizung des Leckagestroms durch Heizstäbe und metallische Wärmebrücken erfolgt.

In den Figuren ist eine Anordnung für eine Trockengasgleitringdichtung in einer Turbomaschine gezeigt, die es ermöglicht unabhängig von Stillstand oder Betrieb Umgebungsbedingungen im Bereich von Trockengasgleitringdichtungen zu schaffen bei denen keine Flüssigkeit ausfällt. Dadurch dass dem Leckagestrom im Stillstand der Turbomaschine ähnlich wie bei deren Betrieb Wärme zugeführt wird, kann eine Unterkühlung im Bereich der Trockengasgleitringdichtung mit allen ihren negativen Wirkungen unterdrückt werden und der Start der Turbomaschine erfolgt aus einem wesentlich sichereren Betriebszustand heraus.

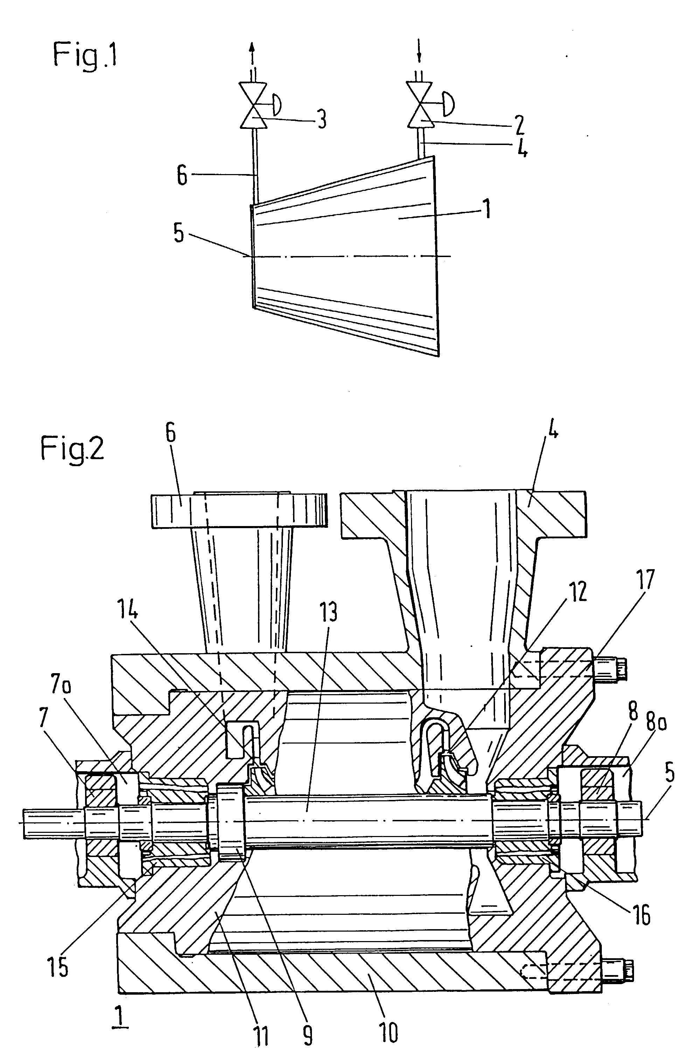

Figur 1 zeigt einen Turboverdichter 1 in einem Prozessschema, der in seiner Achse 5 angetrieben ist und der Prozessgas, welches ihm in einer Saugleitung 4 bei einem bestimmten Systemdruck zufliesst, gegen einen höheren Druck verdichtet und in eine Druckleitung 6 fördert. Saugleitung 4 und Druckleitung 6 sind jeweils mit einem Sperrventil 2, 3 versehen, um den Turboverdichter im Stillstand vom Prozess isolieren zu können. In Figur 2 ist ein solcher Turboverdichter als mehrstufiger Radialverdichter in Topfbauart gezeigt. Diese Bauform ist vor allem für hohe Drücke sinnvoll. Ein Gehäuse 10 mit angesetztem Druckstutzen 6 und Saugstutzen 4 ist als Druckgefäss ausgeführt, in welches ein Innenteil 11 zusammen mit den statischen Umlenkungen, mit Lagerstuhl 7a, 8a Lagern 7,8 und Rotor 13 in Richtung der Achse 5 eingeschoben und mit Schraubbolzen 17 gesichert wird. Der Rotor 13 ist über Trockengasgleitringdichtungen 15, 16 gegen den Innenteil 11 abgedichtet. Der Rotor 13 besitzt hinter seiner letzten Stufe 14 einen Ausgleichskolben 9, um auch bei der druckseitigen Trockengasgleitringdichtung 15 einen ähnlichen Druck wie vor der ersten Stufe 12 und der saugseitigen Trockengasgleitringdichtung beizubehalten. Eine zugehörige Ausgleichsleitung ist hier nicht gezeigt. Zur Montage und Demontage werden die stationären und die rotierenden Teile der Trockengasgleitringdichtung 15, 16 zu einer starren Patrone miteinander verbunden und von aussen in den Innenteil 11 und auf den Rotor aufgeschoben. Die Verbindung zwischen stationärem und rotierendem Teil ist hier nicht gezeigt. Sie wird nach der Montage wieder entfernt.

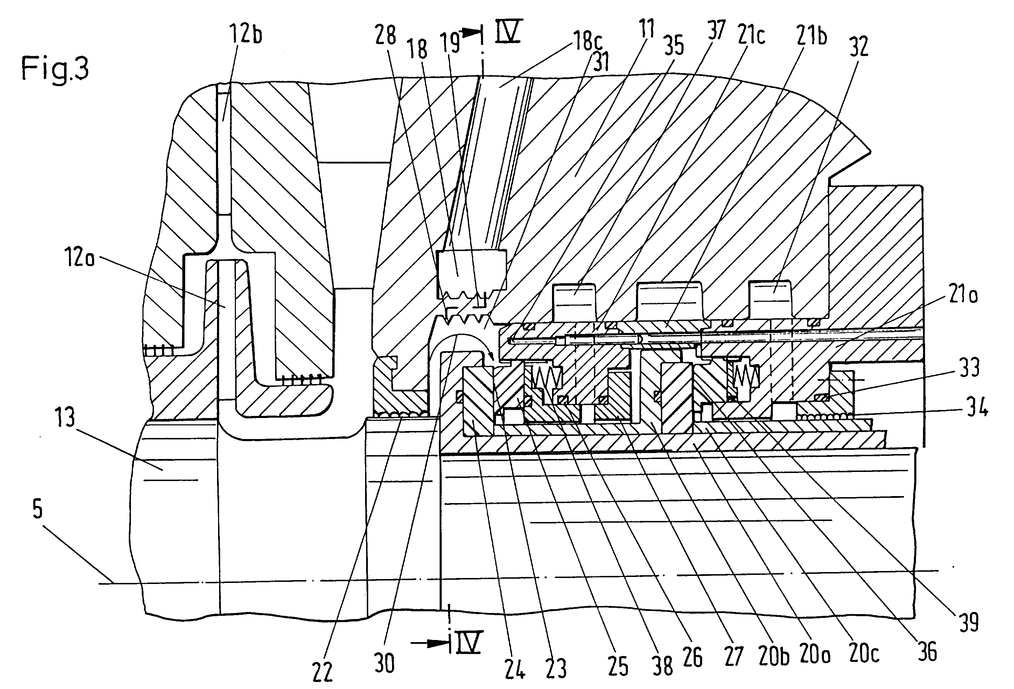

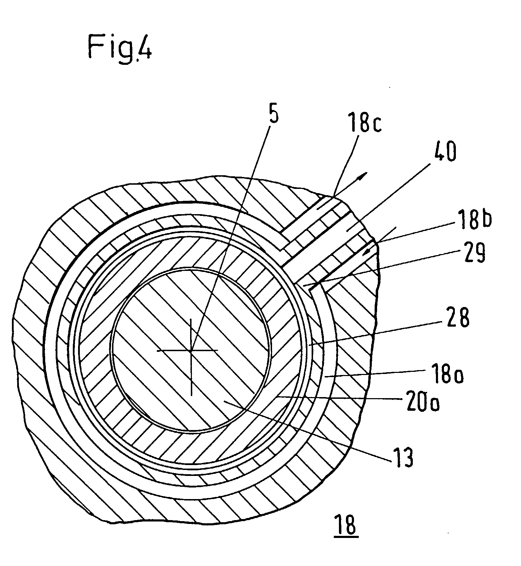

In Figur 3 ist saugseitig der Ausschnitt eines erfindungsgemässen Turboverdichters gezeigt. Der Förderstrom gelangt an der Rotorwelle vorbei in das Laufrad 12a der ersten Stufe, und weiter in einen nachfolgenden Diffusor 12b. Die Deck- und Nabenscheibe des Laufrades 12a sind über Labyrinthe gegen den stationären Teil gedichtet. Zur Trockengasgleitringdichtung 24, 25 hin beschränkt im Stillstand zunächst ein Labyrinth 22 den Leckagestrom 30, dessen Menge jedoch im wesentlichen durch den Durchfluss im Dichtspalt 23 zwischen einem bei Betrieb rotierenden Ring 24 und einem stationären aber axial verschiebbaren Gleitring 25 bestimmt ist. Während dem Betrieb stellt sich am Gleitring 25 mit Hilfe von Anpressfedern 38 und von Weichdichtungen 26, die durch ihre Lage eine Druckentlastung bewirken, ein Gleichgewichtszustand ein, bei dem nur eine geringe Leckrate und eine tolerierbare Erwärmung am Leckagestrom erzeugt werden. Hinter der ersten Trockengasgleitringdichtung 24, 25 teilt sich der Leckagestrom bei einem Druck, der schon sehr viel näher bei Atmosphärendruck liegt. Ein Hauptstrom gelangt in einen Abführkanal 37, von dem er in den Prozess bei einem tiefen Druck zurückgeführt werden kann oder zum Beispiel auf einen Kamin zum abfackeln geführt werden kann. Ein kleiner Teilstrom gelangt an einem Labyrinth 27 vorbei zu einer weiteren Trockengasgleitringdichtung mit Dichtspalt 36, die z.B. als Reservedichtung in Tandemanordnung vorgesehen ist und daher hinter sich ebenfalls einen Abführkanal 32 und ein Labyrinth 34 zur Welle resp. zu einer Wellenbüchse 20a aufweist. Das ganze Dichtungssystem ist als Patrone ausgeführt. Die mit der Welle mitrotierenden Ringe 24 sind zwischen Wellenbüchsen 20a, 20b, 20c gehalten und gefangen. Das Dichtungsgehäuse besteht aus einem äusseren Dichtungsgehäuse 21a, einem Zwischenstück 21b und einem inneren Dichtungsgehäuse 21c, die miteinander verschraubt sind und die axial verschiebbaren Gleitringe 25 in sich aufnehmen. Die axiale Verschiebung erfolgt entlang an Weichdichtungen 26, 39, deren gleichmässige Funktion enorm wichtig ist. Die restlichen Weichdichtungen 33 werden fast nur statisch beansprucht. Bevor der Leckagestrom in die Patrone eintritt durchläuft er einen Ringraum 31 dessen äussere Begrenzung gleichzeitig eine wärmeleitende Trennwand 19 zu einer Heizeinrichtung 18 in Form einer ringförmigen Heizkammer 18a (Fig. 4) bildet. Zum besseren Wärmeübergang und zur Vergrösserung der Austauschfläche ist die Trennwand 19 mit Rippen 28 versehen. Diese Heizeinrichtung 18 kann bei Stillstand des Turboverdichters verhindern, dass die Temperatur im Leckagestrom wesentlich unter die Temperatur, die während des Betriebes auftritt, abfällt, was vor allem bei nicht idealen Prozessgasen eine Gefahr darstellt.

Die Heizeinrichtung kann aber auch im Betrieb eine wertvolle Funktion ausüben, nämlich dann wenn in den Raum 31 zwischen dem Labyrinth 22 zum Saugkanal und der Trockengasgleitringdichtung 24, 25 Sperrgas eingespeist wird, welches über eine Drosselstelle auf annähernd Saugdruck entspannt wird. Auch hier könnte bei zu tiefen Temperaturen Flüssigkeit ausgefällt werden, was durch die gezeigte Heizeinrichtung 18 verhindert wird.

Wie in Figur 4 dargestellt, ist der Ringraum 18a in umlaufender Richtung durch eine Zwischenwand 29 unterbrochen bei welcher auch eine Zuführleitung 18b und eine Abführleitung 18c für ein Fluid als Wärmeträger einmünden, während in der Zwischenwand 29 eine Bohrung 40 zum Einspeisen von Sperrgas vorgesehen ist.

In Figur 3 ist im inneren Dichtungsgehäuse ein Temperaturfühler 35 eingebaut, der im Ringraum 31 die Temperatur des Leckagestroms vor dem Eintritt in den Dichtspalt 23 der Trockengasgleitringdichtung misst. Das Messsignal dieses Temperaturfühlers kann für verschiedene Zwecke verwendet werden. Bei zu tiefer Temperatur des Leckagestroms im Stillstand kann grundsätzlich ein Start des Turboverdichters verhindert werden. Ein zu tiefes Absinken der Temperatur im Leckagestrom kann grundsätzlich das Einschalten der Heizeinrichtung bewirken oder, wenn die Heizeinrichtung schon eingeschaltet ist mit einer Heizungsregelung auf eine bestimmte Solltemperatur hin regeln. Am einfachsten ist die Situation, wenn ein vom Prozess unabhängiger Wärmeträger mit einer passenden Temperatur vorliegt, der bei Stillstand zugeschaltet und bei Betrieb weggeschaltet wird.

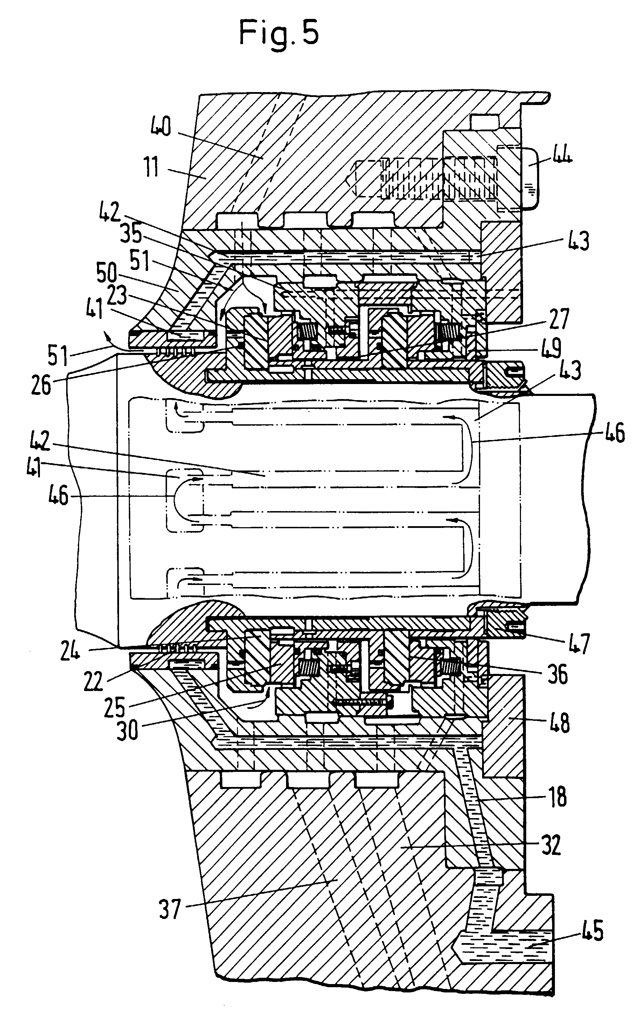

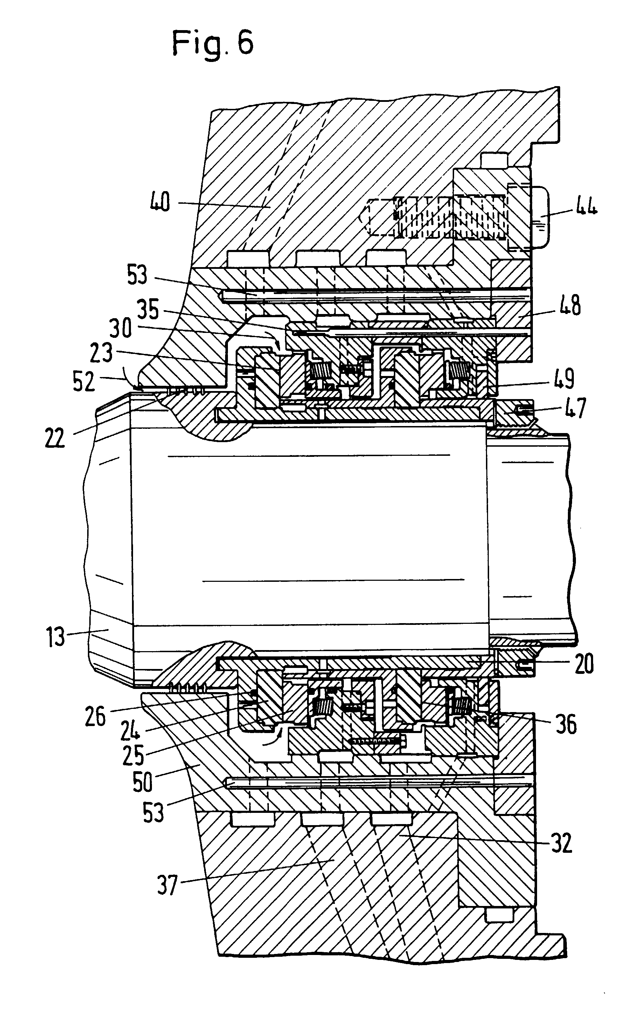

In einer weiteren Dichtungsausführung Fig. 5 und 6 ist die eigentliche Heizeinrichtung 18 in einem separaten patronenförmigen Dichtungsgehäuse 50 untergebracht, welches über Schrauben 44 mit dem Innenteil 11 des Turboverdichters verbunden ist. Die Führungsdurchmesser der Patrone 50 sind gestuft und über nicht gezeigte Weichdichtungen zum Innenteil 11 abgedichtet, um ringförmige Verteilkanäle für Sperrgas mit Bohrung 40 und für Leckageströme 30 in Abführkanäle 37, 32 zu bilden. Zwei Trockengasgleitringdichtungen sind in Tandem-Anordnung hintereinandergeschaltet, um den Druck stufenweise abzubauen, wobei der jeweilige Gegendruck in den Abführleitungen 37, 32 vorgegeben ist. Zur Atmosphäre hin ist eine Stauscheibe 49 nachgeschaltet, um über den Druck vor der Stauscheibe die Funktion der letzten Trockengasgleitringdichtung mit Dichtungsspalt 36 zu erfassen. Der Dichtungsspalt 23, 36 wird jeweils aus einem mit dem Rotor 13 fest verbundenen Gleitring 24 und aus einem axial verschieblichen und gegen das Gehäuse gedichteten Gleitring 25 gebildet. Die rotierenden Gleitringe 25 sind über eine Befestigungsmutter 47 und über ineinandergeschachtelte Wellenbüchsen mit dem Rotor verklemmt und über Weichdichtungen 26 zum Rotor gedichtet. Die axial verschieblichen Gleitringe 25 sind von ineinandergeschachtelten und zu einer Büchse verbundenen Gehäuseteilen axial geführt und durch Federn 38 gegen den rotierenden Gleitring 24 gepresst. Die ineinandergeschachtelten Gehäuseteile sind ebenfalls über gestufte Durchmesser mit nicht gezeigten Weichdichtungen gegen das Patronengehäuse 50 gedichtet, um unterschiedliche Druckräume zu schaffen. Dazu sind die ineinandergeschachtelten Gehäuseteile mit einem Flansch 48 starr verschraubt, der ein gemeinsames Ausfahren mit den ineinandergeschachtelten Wellenhülsen erlaubt. Ausserdem ist der früher erwähnte Temperaturfühler 35 darin untergebracht.

In Figur 5 wird mit einem Sperrgasstrom 51 aus einer Bohrung 40 Sperrgas zugeführt, von dem ein kleiner Leckagestrom 30 zum Dichtspalt 23 abzweigt. Das Sperrgas kann beispielsweise ein bei höherem Druck abgezweigtes und gefiltertes Prozessgas sein, das sich bei der Expansion auf einen sehr viel geringeren Gegendruck abkühlt. Der Sperrgasstrom 51 ist so bemessen, dass über ein zur Saugseite hin wirksames Labyrinth 22 kein wesentlicher Druckunterschied mehr aufgebaut wird. Die Engpässe im Labyrinth verhindern im Normalbetrieb ein Eindringen von verschmutztem Prozessgas. Am Beispiel der Fig. 5 wird nun eine Heizeinrichtung gezeigt, bei der analog zu Fig. 4 ein Fluid als Wärmequelle in einer mäanderförmigen Strömungsführung 46 durch das Patronengehäuse 50 geleitet wird. Bohrungen 42, die über den Umfang des Patronengehäuses 50 verteilt sind, haben abwechselnd an ihren Enden verbindende Taschen 41 und Verbindungskanäle 43 um die Mäanderform zu erzeugen. Auf diese Weise wird der Leckagestrom 30 am ersten und zweiten Dichtspalt 23, 36 vor Erreichen des Dichtspalts auf eine vorgesehene Temperatur aufgeheizt. Das Wärmeträgerfluid wird über Anschlüsse 45 zu- und abgeführt.

In Figur 6 wird eine ähnliche Wirkung mit einer elektrischen Widerstandsheizung erreicht, bei der mehrere Heizstäbe 53 über den Umfang des Patronengehäuses 50 verteilt sind. In dieser Darstellung wird angenommen, dass keine Versorgung mit Sperrgas erfolgt, wie es zum Beispiel im Stillstand der Fall sein kann, und dass der Leckagestrom 30 daher direkt aus dem Kompressorgehäuse mit Prozessgas 52 gespeist wird.

## Patentansprüche

1. Turbomaschine für nicht ideale Prozessgase, insbesondere Turboverdichter (1), mit einem Gehäuse (10) und mit einem Rotor (13), welcher über Trockengasgleitringdichtungen (15, 16) gegenüber dem Gehäuse (10) abgedichtet ist, um einen Leckagestrom (30) von Prozessgas gegen Atmosphäre klein zu halten, wobei der Leckagestrom (30) wahlweise nach Betriebszustand aus Prozessgas oder aus Sperrgas (40) herstellbar ist, und wobei eine auf den Leckagestrom (30) wirksame Heizeinrichtung (18) an der Trockengasgleitringdichtung (15, 16) angebracht ist, die beispielsweise im Stillstand oder vor dem Start der Turbomaschine eine unzulässige Abkühlung des Leckagestromes (30) und ein Ausfällen von nicht gasförmigen Stoffen aus dem gasförmigen Leckagestrom (30) verhindert.

2. Turbomaschine nach Anspruch 1, dadurch gekennzeichent, dass sie bei Prozessdrücken von 100 bar und mehr oder bei Umgebungstemperaturen unter 0°C eingesetzt ist.

3. Turbomaschine nach Anspruch 1 oder 2 dadurch gekennzeichnet, dass die Heizeinrichtung im Bereich der Trockengasgleitringdichtung (15, 16) aus einem abgeschlossenen Ringkanal (18a) mit Zuführleitung (18b) und Abführleitung (18c) gebildet ist, um mit einem beliebigen Fluid unabhängig vom Prozessgas dem Leckagestrom Wärme zuzuführen.

4. Turbomaschine nach einem der Ansprüche 1 bis 3, dadurch gekennzeichnet, dass die Heizeinrichtung (18) in Richtung des Leckagestromes (30) gesehen vor dem Dichtspalt (23) einer ersten Trockengasgleitringdichtung (24, 25) angeordnet ist, um den Leckagestrom soweit aufzuheizen, dass bei einer Expansion im und nach dem Dichtspalt (23) keine unzulässige Abkühlung stattfindet.

5. Turbomaschine nach Anspruch 3, dadurch gekennzeichnet, dass der Ringkanal (18a) durch Bohrungen (42) in axialer Richtung mäanderförmig entlang der Trockengasgleitringdichtung (15, 16) verzerrt ist.

6. Turbomaschine nach Anspruch 4, dadurch gekennzeichnet, dass der Leckagestrom (30) vor dem Erreichen des Dichtspalts (23) einen Ringraum (31) durchquert, welcher von einer wärmeleitenden Trennwand (19) der Heizeinrichtung (18) umschlossen ist.

7. Turbomaschine nach einem der Ansprüche 1 oder 2, dadurch gekennzeichnet, dass die Heizeinrichtung (18) als elektrische Widerstandsheizung ausgeführt ist.

8. Turbomaschine nach Anspruch 7, dadurch gekennzeichnet, dass die elektrische Widerstandsheizung in Form von mehreren über den Umfang der Trockengasgleitringdichtungen (15, 16) verteilte Heizstäbe (53) ausgeführt ist, wobei metallische Brücken die Wärme zum Leckagestrom (30) führen.

9. Turbomaschine nach einem der Ansprüche 1 bis 8, dadurch gekennzeichnet, dass das Gehäuse der Trockengasgleitringdichtung (15, 16) als Patrone (50) ausgeführt ist, welche die Heizeinrichtung enthält.

10. Turbomaschine nach einem der Ansprüche 1 bis 9, dadurch gekennzeichnet, dass vor dem Eintritt des Leckagestromes (30) in den Dichtspalt (23) der Trockengasgleitringdichtung (24, 25) ein Temperaturfühler (35) angeordnet ist, der den Start der Turbomaschine über eine Steuerung verhindert, wenn die gemessene Temperatur unter einem vorgegebenen Mindestwert liegt.

11. Turbomaschine nach Anspruch 10, dadurch gekennzeichnet, dass der Temperaturfühler (35) beim Unterschreiten einer vorgegebenen Solltemperatur die Heizeinrichtung (18) über die Steuerung einschaltet.

12. Turbomaschine nach einem der Ansprüche 1 bis 11, dadurch gekennzeichnet, dass über eine Steuerung mit dem Abstellen der Turbomaschine die Heizeinrichtung (18) einschaltbar ist.
